Europäisches Patentamt

European Patent Office

Office européen des brevets

(19)

(11) **EP 0 486 960 B1**

(12) **EUROPÄISCHE PATENTSCHRIFT**

(45) Veröffentlichungstag und Bekanntmachung des Hinweises auf die Patenterteilung:
**24.07.1996 Patentblatt 1996/30**

(51) Int Cl.$^6$: **G06K 19/07**, G06K 19/073

(21) Anmeldenummer: **91119508.9**

(22) Anmeldetag: **15.11.1991**

(54) **Kodierte Chipkartenaktivierung**

Coded activation for a chip card

Dispositif pour l'activation codée d'une carte de circuit

(84) Benannte Vertragsstaaten:
**DE FR GB**

(30) Priorität: **17.11.1990 DE 4036765**

(43) Veröffentlichungstag der Anmeldung:
**27.05.1992 Patentblatt 1992/22**

(73) Patentinhaber: **Angewandte Digital Elektronik GmbH**
**21521 Dassendorf (DE)**

(72) Erfinder: **Kreft, Hans-Diedrich**
**W-2055 Dassendorf (DE)**

(74) Vertreter: **Mierswa, Klaus, Dipl.-Ing. et al**
**Friedrichstrasse 171**
**68199 Mannheim (DE)**

(56) Entgegenhaltungen:
EP-A- 0 281 142          EP-A- 0 282 926
EP-A- 0 291 685          EP-A- 0 296 414
WO-A-87/07061            DE-A- 3 904 215
DE-C- 3 935 364          US-A- 4 885 578

**Beschreibung**

Unter Verwendung der Normen ISO 7816 (für kontaktbehaftete Chipkarten) und ISO 10536 (für kontaktfreie Chipkarten) werden zunehmend Chipkarten am Markt eingesetzt. Es sind aus den Schriften DE 27 38 113, US 4 885 578, WO 87/07061, DE 39 04 215 verschiedene Verfahren bekannt, um einem Kartennutzer den Zugang zu dem Chip durch Eingabe einer Zahl (Kennung) zu gestatten oder zu verwehren.

Aus der Patentschrift DE-C-39 35 364 sind Chipkarten gemäß dem Oberbegriff des Patentanspruches 1 bekannt, die sowohl kontaktfrei als auch kontaktbehaftet arbeiten (marktüblich CombiCard genannt). Eine CombiCard enthält einen Chip, welcher zwischen den beiden Funktionsweisen kontaktbehaftet und kontaktfrei selbsttätig ohne zusätzliche Eingabe einer Information umschaltet und allein in Abhängigkeit von der Funktionsweise Chipfunktionen aktiviert. Ein Nutzer kann bei diesen Karten deren Funktionsweisen nicht beeinflussen.

Die hier benannten Chipkarten können auch wahlweise zusätzlich und in bekannter Weise mit einem Magnetstreifen ausgerüstet sein.

Die patentgemäß zu lösende Aufgabe ist:

- Chipkarten, welche verschiedene Funktionsweisen haben (z.B. kontaktfrei, kontaktbehaftet nach der DE 39 35 364), nur für bestimmte Nutzer zugänglich zu machen und in Abhängigkeit von einer eingegebenen Information einen Chip in der Karte in verschiedene Aktivierungsstufen zu versetzen.

Die Lösung dieser Aufgabe erfolgt durch die Kennzeichnenden Merkmale des Patentanspruches 1.

Von den herkömmlichen Karten unterscheiden sich die patentgemäßen dadurch, daß ein patentgemäß beschriebener Chip mit besonderen Eigenschaften zusätzlich auf die Karte aufgebracht wird. Es handelt sich um einen zunächst inaktiven Chip, der erst später gemäß der patentgemäßen Beschreibung aktiviert wird. Dieser inaktive Chip ist für den Kartennutzer unsichtbar in das Plastikmaterial der Karte eingeschweißt. Von Vorteil ist hier die Verwendung berührungslos arbeitender Chips, welche zu Ihrer Funktion Daten und Signale ohne Kontaktflächen übertragen und somit keine sichtbaren Kontaktflächen in der Plastikkarte benötigen. Die Nutzung der mit inaktiven Chips versehenen Karten soll nicht eingeschränkt sein. Erst durch patentgemäße Aktivierung werden die zusätzlichen Leistungen des Chips, wie beispielsweise eine Speichernutzung freigegeben. Dies geschieht durch ein besonders ausgestaltetes Mikroprogramm. Das Mikroprogramm enthält die patentgemäßen Aktivierungsmodalitäten. Das Einbringen des Mikroprogrammes in einen Chip ist Bestandteil der technisch üblichen Chipherstellungsprozesse.

Die patentgemäße Aktivierung geschieht, im Gegensatz zur elektronischen Ausgestaltung der am Markt befindlichen Chips, in zwei Stufen. Beispielsweise melden kontaktbehaftete Chips ihre Bereitschaft zum Datenverkehr unmittelbar nach Anlegen einer Betriebsspannung ohne Aktivierung eines internen Prüfablaufes und senden eine Datensequenz. In gleicher Weise arbeiten kontaktfreie Karten, welche vorzugsweise die Energie für den Chip nach dem Transformatorprinzip zur Verfügung stellen. Diese vollkommen abgekapselten Chips ohne Kontaktanschlüsse eignen sich in besonderer Weise zur Einbringung in Plastikkarten, da nicht nur der Chip in der Plastikkarte unsichtbar ist, auch von außen der Karte nicht anzusehen ist, ob sie einen Chip enthält. Auch andere Energieübertragungsverfahren zur Aktivierung, wie Licht oder Schall können genutzt werden.

Die erste Aktivierung führt, unabhängig von der Bereitstellung der energetischen Versorgung nicht zum Aussenden einer Sequenz zur Meldung der Bereitschaft des Chips. Für einen unbefugten Benutzer ist somit die Bereitschaft des Chips von außen nicht erkennbar. Diese patentgemäße Lösung führt bei kontaktlosen und mit Kontakt arbeitenden Karten zu einer erheblichen Erschwerung beim unbefugten Umgang mit der Karte. Kontaktbehaftete Karten liefern gemäß ISO Normvorgabe mit Aufnahme ihrer Energieversorgung ihren Takt, der zur Datenkommunikation benötigt wird. Dies bedeutet, daß ein Takt gleichzeitig mit der Chipfunktion zur Verfügung steht und selbsttätig die Karte ihre Bereitschaft meldet.

Die erste Aktivierungsstufe öffnet mittels eines Schalters einen Empfangskanal im Chip mit den dazugehörigen Ports. Diese Aktion der Öffnung zum ausschließlichen Datenempfang der ersten Aktivierungsstufe ist außerhalb des Chips nicht erkennbar, da ein Datensenden vom Chip zu einem externen Empfänger ausgeschlossen ist. Der Schalter S1 sorgt dafür, daß eine zweite Aktivierungsstufe des Chips, welche gegenüber der ersten bezüglich der Stellung des Schalters S1 dominiert, eingeschaltet wird. Der von der ersten Stufe geöffnete Empfangskanal kann mit dazugehörigem Port mittels S1 selbsttätig und dominant von der zweiten Aktivierungsstufe geschlossen werden. Die Schließung erfolgt, sofern die ersten über den Kanal einlaufenden Schlüsseldaten nicht mit den im Mikroprogramm festverdrahtet oder unlöschbar vorliegenden Immanentdaten übereinstimmen. Zusätzlich öffnet diese Aktivierungsstufe den bidirektionalen Datenaustausch sowie weitere Kanäle.

Enthalten die Immanentdaten die Information eines Kalenderdatums ist der Schalter S1 und seine Schaltfunktion der Kanalöffnung oder Kanalschließung abhängig von einem Datum. Patentgemäß werden aktivierbare Karten erst zu bestimmten, per Kalender bestimmten Zeitpunkten aktiviert oder deaktiviert.

Das oben beschriebene Prinzip hat den Nachteil, daß die Schlüsseldaten mit den Immanentdaten übereinstimmen müssen, womit für einen unbefugten Nutzer die Ermittlung der Immanentdaten in der Karte durch Abfrage, der an die Karte übertragenen Daten, möglich ist. Damit können Chipkarten mit denselben Immanentdaten hergestellt werden, wie sie bereits im Umlauf sind.

Dieser Nachteil wird durch Anspruch 2 gelöst, welcher sich besondere Eigenschaften von Primzahlen zunutze macht. Anspruch 2 nutzt die mathematische Tatsache , daß in kurzer Rechenzeit das Multiplikationsergebnis zweier bekannter Primzahlen gebildet werden kann. Der umgekehrte Vorgang, die Zerlegung der Zahl in ihre beiden Primfaktoren benötigt wesentlich größere Rechenzeiten.

Zur Erläuterung wird Formel 1 benutzt:

$$\text{Formel 1: } P(1,2) = P1 * P2$$

Wobei $P(1,2)$ für die per Multiplikation gewonnene große Zahl steht. P1, P2 stehen für die beiden Primzahlfaktoren, welche die Zahl $P(1,2)$ per Multiplikation bilden. Werden zwei bekannte Primzahlen P1, P2 zu der Zahl $P(1,2)$ per Multiplikation verknüpft, so ist die Zerlegung dieser Zahl $P(1,2)$ auch bei Anwendung leistungsfähiger Rechner und mathematisch ausgeklügelter Algorithmen in ihre unbekannten Primfaktoren P1, P2 wesentlich zeitaufwendiger als ihre multiplikative Verknüpfung. Liegt beispielsweise das Produkt einer mittelgroßen Primzahl P1 mit einer zweiten vergleichbar mittelgroßen Primzahl P2 in der Größenordnung von 200 bit Speicherplatz, ist eine rechnerische Ermittlung der beiden unbekannten Faktoren in wirtschaftlichen Zeiträumen (beispielsweise länger als die Dauer eines Menschenleben) nicht gegeben.

Handelt es sich bei der Zahl $P(1,2)$ nicht um das Produkt zweier Primzahlen, so gibt es mehr als nur zwei Faktoren, da die Faktoren selbst wieder aus Primzahlen multiplikativ zusammengesetzt sind und sich derart mehr als ausschließlich eine Zerlegung in zwei Primfaktoren ergeben kann. Aufgrund dieser Tatsache gibt es zu den besonderen Zahlen $P(1,2)$ gemäß Formel 1 nur zwei Primfaktoren.

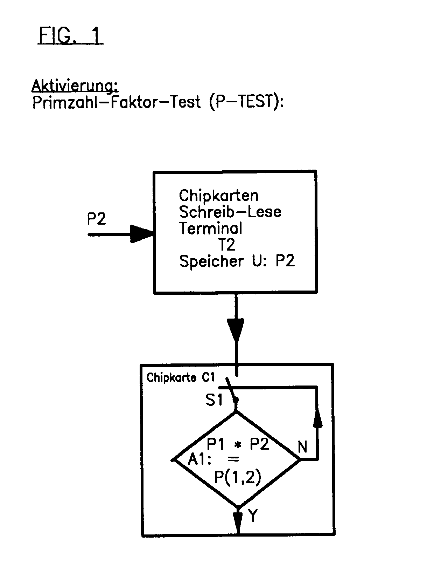

In FIG. 1 ist symbolisch dargestellt, wie in Chipkarten bei Nutzung in einem Chipkarten Schreib-Lese-terminal T2 der Primzahl-Faktor-Test (P-Test) durchgeführt wird. In das Terminal T2 wurde per Chipkarten Eingabe oder auf andere Weise die Primzahl P2 eingegeben (symbolisiert durch den Pfeil mit der Beschriftung P2). P2 ist der ergänzende Primzahlfaktor, der mit P1 multiplikativ $P(1,2)$ bildet. P2 wird in die Chipkarte C1 eingelesen, die Karte multipliziert, aufgrund des im Mikrocode enthaltene Algorithmus, P1 mit P2 und prüft ob das Ergebnis mit $P(1,2)$ übereinstimmt. Fällt die Prüfung negativ aus, d.h. die Multiplikation ergibt nicht $P(1,2)$, so sperrt die Karte selbsttätig über den Schalter S1 die Verbindung zum Terminal P2.

Die Prüfung von Immanentdaten welche aus zwei Zahlen $P(1,2)$ und P1 vorzugsweise in binärer Form bestehen und in zwei unterschiedlichen Speichern oder Mikroprogrammbereichen des Kartenchips liegen ist in FIG. 1 in dem mit C1 bezeichneten Teil dargestellt. Die Schlüsselzahl P2 liegt nicht im Speicher des Chips, wie aus FIG. 1 ersichtlich. Eine Aktivierung des Chips durch Öffnung von S1 gelingt, wenn die vom Mikrocode selbsttätig durchgeführte Multiplikation von P1 mit P2 das Ergebnis $P(1,2)$ liefert. Durch das Rautensymbol für Fallunterscheidung ist dies in FIG. 1 dargestellt. Eine Aktivierung des Chips gelingt nur, sofern die Primzahl P2 einem externen Nutzer bekannt ist. Die Ausgabe und das in den Verkehr bringen von Chipkartenchips führt nur zu aktivierbaren Chipkarten, wenn geeignete $P(1,2)$ und P1 als Immanentdaten geladen sind, welche zu Primzahlen als Schlüsseldaten passen. Die Bekanntheit der Zahl P2 führt nicht zur unbefugten Nachbildung von Chips mit gleichen Immanentdaten.

Trotz der durch die oben beschriebenen Maßnahmen erzielten Sicherheiten, können Chipkarten in Umlauf kommen, welche keine Immanentdaten enthalten und mit ihrem Mikroprogramm den Ablauf der in den Ansprüchen beschriebenen Vorgänge vortäuschen, diese Vorgänge aber nicht auf der Karte durchführen, mithin die Durchführung nur simulieren. Die Immanentdaten im Chip enthalten zusätzlich einen Testprogrammcode, der bei Eingabe einer beliebigen vorgegeben Testzahl mit der Ausgabe einer Ziffernkombination, der Testantwort antwortet. Die Testantwort ergibt sich als Kombination zwischen Immanentdaten und Testzahl gemäß der Testprogrammcodevorgabe. Mit der Ausgabe einer Testantwort ist gewährleistet, daß diese Kartenchips Immanentdaten gespeichert haben müssen oder per Zufallsgenerator (Programm im Chip zur Erzeugung von Zufallszahlen) die Testantwort erzeugen. Derart ausgestaltete Karten unterscheiden sich von Karten, welche eine Aktivierung nur simulativ durchführen. Bei Kenntnis der Immanentdaten, des Testprogrammcodes, der Testzahl und der Testantwort ist es nun möglich, genau die Chips zu identifizieren, welche keine richtigen, d.h. gültigen Immanentdaten im Chip haben. Durch diesen Anspruch ist es möglich, simulativ arbeitende Chips zu erkennen. Ferner sind Immanentdaten in Chips ohne ihre Preisgabe zu prüfen, da nicht die Immanentdaten sondern eine Verknüpfung per Mikroprogramm ausgegeben wird.

Sollen beispielsweise Chipkarten an Terminals geprüft werden, wird eine willkürliche, dem Belieben der jeweiligen Prüfperson anheimgestellte Testzahl in das Terminal eingegeben. Das Mikroprogramm kann bei nicht ausreichender Eingabe, d.h. ungenügender Ziffernfolge die Eingabe weiterer Ziffern anfragen, bis eine genügend hohe Anzahl erreicht ist. Das Ergebnis, die Testantwort kann zusammen mit der Testziffernfolge an eine Zentrale gesandt werden in der die gültigen Immanentdaten und Testprogrammcodes (z.B. ein Multiplizieralgorhytmus) bekannt sind. Bei dieser Übersendung bleiben die Immanendaten des Chips unerkennbar aufgrund der vorstehenden Ausführungen über Primzahlverschlüsselungen. In der Zentrale kann aus der Testantwort problemlos herausgefunden werden, ob die entzifferten Immanentdaten zu den ausgegebenen, autorisierten passen.

Wichtig ist bei diesem Verfahren, daß von Unbefugten in Umlauf gebrachte Chipkarten an jedem beliebigen Terminal identifiziert werden können. Ist das Terminal direkt mit einer Datenzentrale per online verbunden, kann die Prüfung unmittelbar erfolgen. Andernfalls können die Daten vom Terminal ausgedruckt und an die Zentrale versandt werden. Die Übersendung ist bezüglich einer Entzifferung unkritisch. Derart können beispielsweise Hotels, Ferienclubs Karten prüfen lassen und es werden nachgemachte Karten herausgefiltert. Dies ist wichtig, da davon ausgegangen werden muß, daß bei steigender Zahl ausgegebener Chipkarten große Organisationen versuchen werden, Karten in Umlauf zu bringen, die simulativ alle Kartenanforderungen erfüllen werden. Eine Prüfung der Kartennummer beispielsweise in Form einer Kontonummer reicht nicht, da zum Zeitpunkt des Geschäftes die Anfrage bezügllich der Richtigkeit und der Deckung des Kontos eine zustimmende Antwort ergibt, sofern das Konto einer unbeteiligten Person genommen wurde.

Bei dem oben beschriebenen Prinzip ist es erforderlich Daten zu einer Zentrale zu senden, um die Richtigkeit der Immanentdaten und Programme zu prüfen. Dies ist nicht erforderlich wenn die Karte A mit ihrer Testantwort als Vergleichs- und Bezugskarte für den Test anderer Karten dient. Da die eingegebene Testzahl beliebig ist, ist die Testantwort für diese beliebige Testzahl nicht vorhersehbar. Bei genügend groß gewählten Testzahlen und Immanentdaten ist auch die Sicherheit der Immanentdaten gewährleistet, da es nicht in wirtschaftlich vertretbaren Zeiträumen eine Ermittlung der Immanentdaten durch Testabfragen geben kann. Ist eine Testantwort im Terminal abgespeichert, kann das Terminal selbsttätig anderen Karten die Testantwort mit derselben Testzahl abfragen. Bei Vergleich mit der abgespeicherten Testantwort weist Nichtübereinstimmung der Testantworten auf Abweichungen der Immanentdaten hin. Dieses Verfahren eignet sich besonders in Fällen, in denen eine Prüfung vor Ort ausreicht.

In obigem Fall müssen die Testantworten im Terminal bekannt sein. Ein Terminal könnte so umgebaut werden, daß die Übereinstimmung von Testantworten auch simulativ erzeugt wird, womit der Test hinfällig ist. In diesem Falle wird aber vorausgesetzt, daß das Terminal physikalisch noch in einwandfreier Weise arbeitet. Bei kontaktfrei arbeitenden Karten ergibt sich die Möglichkeit zwei Karten unmittelbar übereinanderzulegen und sie in dieselbe physikalische Umwelt eines Schreib-Leseterminals zu geben. Die Aktivierung beider Karten kann also durch gleiche physikalisch - technische Umwelt gewährleistet werden. Die physikalische Überlagerung der Testantworten bei Nichtgleichheit der Daten der Testantworten ist ein Merkmal für die Nichtstimmigkeit der Immanentdaten im Chip. Es ist also nicht nötig die Testantwort auszulesen. Die physikalische Beschaffenheit der Testantwort ist das Merkmal für die Übereinstimmung zweier Karten.

Aus dem vorstehend Dargelegtem ist ersichtlich, daß Primzahlen in besonderer Weise für Verschlüsselungszwecke geeignet sind. Unabhängig von dieser besonderen Eignung stellen beliebige Zahlen mit genügender Ziffemanzahl ebenfalls eine Sicherheit für Verschlüsselungen dar. Aus diesem Grund können alle patentgemäßen Immanentdaten auch durch beliebig große Zahlen gebildet werden. Nach herkömmlichem Wissen werden Zahlen sich für Verschlüsselungszwecke besonders dadurch eignen, daß sie nicht nach einem Rechenverfahren erzeugt werden, welches eine häufige Wiederholung von Ziffern oder Ziffernfolgen darstellt.

Das für die Aktivierung patentgemäß beschriebene Verfahren eignet sich auch, um Speicherplatz auf der Chipkarte bestimmten Nutzern selektiv zugänglich zu machen, womit sich ein Nutzerclub für diesen Speicher ergibt. Diese Nutzer zeichnen sich durch die Kenntnis oder Anwendung eines gleichen Schlüssels aus, der es ihnen gestattet genau den ihnen zugewiesenen Speicherplatz auf der Chipkarte zu nutzen.

Derart können Handelsorganisationen sich in der Chipkarte den Zugang zu bestimmten Speicherplätzen öffnen. Der selektive Zugriff auf den Speicherbereich, in dem die Immanentdaten liegen, wird durch eine Nutzerzahl als Kürzel zur Kennzeichnung des Nutzers ermittelt. Bevor der diesem Kürzel folgende Speicherplatz beschrieben oder gelesen werden kann, muß ein Test gemäß den patentgemäß beschriebenen Verfahren durchgeführt werden. Damit sind Karten, welche simulativ eine Speichernutzung ermöglichen, patentgemäß ausgeschlossen. Diesem Verfahren kommt große Bedeutung zu, wenn Handelsorganisationen, Dienstleister (z.B. Krankenhäuser) sich mit ihren spezifischen Daten auf einer Karte initialisieren, d.h. Speicherplatz auf der Karte für ihre spezifischen Zwecke nutzen und gleichzeitig anderen Nutzern der Zugang zu anderen Speicherplätzen möglich sein soll. Werden Karten in Umlauf gebracht, welche den Zugriff auf eine Clubspeicherstelle ohne Sicherheitsprüfung durchführen, kann in unberechtigter Weise der Speicher verändert oder gelesen werden.

**Patentansprüche**

1. Chipkarte, ausgeführt in einer Bauart, welche sowohl in kontaktfreier Funktionsweise als auch in kontaktbehafteter Funktionsweise arbeiten kann **gekennzeichnet durch** :

   - Mittel, welche die Chipkarte in einem kontakbehafteten und/oder kontaktfreien Bedienterminal über die kontakbehaftete oder kontaktfreie Funktionsweise mit einem in die Chipkarte eingebetteten Chip (CI) in eine erste Aktivierungsstufe gebracht wird,
   - wobei ausschließlich ein Empfangskanal (Port) im Chip geöffnet wird und Daten ausschließlich empfangen werden können,

- und durch Mittel, welche den Chip in eine zweite Aktivierungsstufe bringen, die gegenüber der ersten schaltungstechnisch dadurch dominiert, daß in dieser zweiten Aktivierungsstufe der in der ersten Aktivierungsstufe geöffnete Empfangskanal mit dazugehörigem Port selbsttätig und dominant geschlossen wird, sofern die ersten über den Empfangskanal einlaufenden Daten in Form von Schlüsseldaten nicht mit Daten übereinstimmen, welche im Chip festverdrahtet und/oder unlöschbar als Immanentdaten enthalten sind,
- Mittel, welche bei Übereinstimmung der Schlüsseldaten mit den Immanentdaten in der zweiten Aktivierungsstufe einen Kanal für bidirektionalen Datenaustausch öffnen.

2. Chipkarte gemäß Anspruch 1 **gekennzeichnet, durch**

- einen Schalter (S1) der zum Ein-/Ausschalten der ersten Aktivierungsstufe dient und in der zweiten Aktivierungsstufe gemäß der empfangenen Schlüsseldaten gesteuert wird.

3. Chipkarte gemäß Anspruch 1 **dadurch gekennzeichnet, daß**

- im Chip zusätzlich ein Testprogrammcode enthalten ist,
- welcher bei Eingabe einer beliebigen vielzifferigen Testzahl mit der Ausgabe einer Ziffernkombination antwortet
- und diese Testantwort sich als Konbination zwischen Immanentdaten und Testzahl unter Anwendung des Programmcodes im Chip ergibt.

4. Chipkarte gemäß Anspruch 1 **gekennzeichnet durch** :

- Mittel, um zusatzliche Immanentdaten in den Chip zu laden, um bestimmte Bereiche eines Speichers eines in der Karte enthaltenen Mikrorechners durch den Chip für einen zugriff zu öffnen oder zu schließen,
- und damit für unterschiedlichen Nutzer Speicher zur Verfügung zu stellen, der von allen Nutzern, welche einen passende Schüssel besitzen, angesprochen werden kann,
- so daß diese Nutzer einen geschlossenen, durch denselben Schlüssel gekennzeichneten Nutzerclub für diesen Speicherteil bilden.

## Claims

1. A chip card of a design which is able to function both in non-contact and contact manner, characterised by

- means for bringing the chip card, in a first activation stage, into a contacting and/or non-contact control terminal, by the contacting or non-contact method with a chip (C1) embedded in the chip card,
- wherein only a reception channel (Port) is opened in the chip and data can only be received,
- means for bringing the chip into a second activation stage, the circuitry of which predominates over that of the first stage in that in this second activation stage the reception channel with the associated port, which is opened in the first activation stage, is closed automatically and dominantly, so long as the first data fed in, via the reception channel, in the form of key data, do not match the data which are fixedly and/or non-erasably contained as immanent data in the chip,
- means which open a channel for bi-directional data exchange when the key data are match with the immanent data in the second activation stage.

2. A chip card according to claim 1, characterised by

- a switch (S1) which serves to switch the first activation stage on/off and is controlled in the second activation stage according to the key data received.

3. A chip card according to claim 1, characterised by

- means for providing that a test program code is additionally contained in the chip,
- which code responds by outputting a combination of digits when any test number of several digits is input
- and this test response proves to be a combination between immanent data and test number using the program code in the chip.

4. A chip card according to claim 1, characterised by

- means for storing additional immanent data in the chip so that the chip may open or close access to certain regions of a memory of a microcomputer contained in the card,
- thereby making memories available to various users, which can be used by all those who have a matching key,
- so that these users form a closed user club for this memory part, which is characterised by the same key.

## Revendications

1. Carte à puce agencée selon un type de réalisation, qui peut travailler aussi bien selon un fonctionnement sans contact que selon un fonctionnement avec contact, caractérisée par :

   - des moyens, qui amènent la carte à puce dans un premier échelon d'activation, dans un terminal de commande faisant intervenir un contact et/ou sans contact, par l'intermédiaire du fonctionnement avec contact ou sans contact, une puce (CI) étant insérée dans la carte à pouce,
   - exclusivement un canal de réception (port) étant ouvert dans la puce, et des données pouvant être exclusivement reçues; et
   - par des moyens, qui amènent la puce dans un second échelon d'activation, qui est dominant, conformément à la technique des circuits, par rapport au premier échelon d'activation par le fait que, dans ce second échelon d'activation, le canal de réception ouvert dans le premier échelon d'activation et auquel est associé le port, est fermé de façon automatique et prédominante dans la mesure où les premières données arrivant par l'intermédiaire du canal de réception et se présentant sous la forme de données de code ne coïncident pas avec des données, qui sont contenues sous la forme de données permanentes dans la puce, conformément à un câblage fixe ou bien d'une manière ineffaçable, et
   - des moyens qui, en cas de coïncidence des données de code avec les données permanentes, ouvrent, dans le second échelon d'activation, un canal pour l'échange bidirectionnel de données.

2. Carte à puce selon la revendication 1, caractérisée par :

   - un interrupteur (S1), qui sert à activer/désactiver le premier échelon d'activation et, dans le second échelon d'activation, est commandé en fonction des données de code reçues.

3. Carte à puce selon la revendication 1, caractérisée en ce que :

   - en outre la puce contient un code de programme de test,
   - qui, lors de l'introduction d'un nombre quelconque de tests à quatre chiffres, répond avec la délivrance d'une combinaison de chiffres, et
   - cette réponse de test est obtenue en tant que combinaison entre des données permanentes et le nombre de tests moyennant l'application du code de programme dans la puce.

4. Carte à puce selon la revendication 1, caractérisée par :

   - des moyens pour charger des données permanentes supplémentaires dans la puce de manière à ouvrir ou fermer des zones déterminées d'une mémoire d'un micro-ordinateur contenu dans la carte, au moyen de la puce pour un accès, et
   - mettre de ce fait à disposition d'utilisateurs différents une mémoire, qui peut répondre à tous les utilisateurs, qui possèdent un code adapté,
   - de sorte que ces utilisateurs forment un club fermé d'utilisateurs, caractérisée par le même code, pour cette partie de la mémoire.

## FIG. 1

Aktivierung:
Primzahl–Faktor–Test (P–TEST):

P2 →

Chipkarten
Schreib–Lese
Terminal
T2
Speicher U: P2

↓

Chipkarte C1

S1

$$A1: \quad P1 * P2 = P(1,2)$$

N

Y